## Europäisches Patentamt
## European Patent Office
## Office européen des brevets

(19)

(11) Numéro de publication: **0 181 010 B1**

# FASCICULE DE BREVET EUROPÉEN

(12)

(45) Date de publication du fascicule du brevet: **12.10.88**

(51) Int. Cl.⁴: **C 02 F 11/00, C 04 B 28/26**

(21) Numéro de dépôt: **85200424.1**

(22) Date de dépôt: **20.03.85**

(54) Procédé de solidification de boues résiduaires.

(30) Priorité: **25.10.84 BE 2060527**

(43) Date de publication de la demande:
**14.05.86 Bulletin 86/20**

(45) Mention de la délivrance du brevet:
**12.10.88 Bulletin 88/41**

(84) Etats contractants désignés:
**AT CH DE FR GB IT LI LU NL SE**

(56) Documents cité:
**FR-A-2 098 777**
**FR-A-2 272 044**
**GB-A-1 337 301**

**TECHNICAL NOTES RCA, no. 1195, 7 décembre 1977, pages 1 et 2, Princeton, N.J., US; G.F. JASKOT et al.: "Method for ultimate disposal of industrial waste"**

**Le dossier contient des informations techniques présentées postérieurement au dépôt de la demande et ne figurant pas dans le présent fascicule.**

(73) Titulaire: **De Neef, Dirk, Ferdinand Verbiestlaan 34, B-2520 Edegem (BE)**

(72) Inventeur: **De Neef, Dirk, Ferdinand Verbiestlaan 34, B-2520 Edegem (BE)**

(74) Mandataire: **Donné, Eddy, M.F.J.Bockstael Arenbergstraat 13, B-2000 Anvers (BE)**

LIBER, STOCKHOLM 1988

## Description

L'invention concerne une procédé de solidification de boues résiduaires ou de dépôts similaires; il s'agit, en d'autres termes, d'une méthode servant à transformer des déchets aqueux à l'origine, tels que des boues résiduaires, des boues d'émoulage, des residus aqueux d'installations industrielles d'épuration des eaux et autres, mais également des ordures domestiques ou autres résidus solides, éventuellement broyés et humidifiés, en une masse solide et durable, par adjonction d'agents chimiques.

Il existe déjà des procédés connus de solidification de boues residuaires, consistant en l'adjonction aux boues ou autres résidus de silicate de soude ou de potassium mélangé à du ciment pour en faire une masse solide.

Le produit résiduaire obtenu par cette méthode présente toutefois le désavantage qu'au contact de l'eau, les matières phytotoxiques présentes dans le ciment et généralement aussi dans les boues résiduaires se lessivent, de sorte que ledit produit résiduaire constitue un danger pour la végétation.

Un autre désavantage qu'entraîne le produit résiduaire obtenu par la méthode décrits est que les agents toxiques éventuels contenus dans la boue résiduaire solidifiée continuent à se lessiver, risquant ainsi de contaminer le sol et de polluer les nappes phréatiques avec toutes les conséquences néfastes, voire désastreuses qui en découlent.

Il existe par ailleurs des procédés connus de solidification de résidus aqueux utilisant en plus des durcisseurs anorganiques et/ou organiques. Or, les produits résiduaires obtenus selon ces méthodes présentent l'inconvénient d'être phytotoxiques ou, en d'autres termes, nuisibles à l'environnement. La raison en est que les durcisseurs anorganiques contiennent des métaux lourds, comme le chrome, et que les durcisseurs organiques sont constitués de composants qui comprennent au plus douze - et souvent moins que huit - atomes de carbone.

La présente invention propose par conséquent un procédé amélioré de solidification de boues résiduaires par silicates, qui ne présente pas les inconvénients cités et autres des méthodes connues.

Les principaux avantages du procédé de la présente invention sont liés au caractère non polluant des produits résiduaires obtenus, lequel élargit le champ d'applications et/ou les possibilités de traitement desdits produits résiduaires.

Un premier avantage de la présente invention est que le produit résiduaire définitif ne peut se drainer et que, dès lors, il élimine totalement tout risque de contamination du sol en cas d'ensevelissement.

Un deuxième avantage est que les composants solubles dans l'eau, tels que les métaux lourds mais aussi d'autres agents toxiques contenus dans les boues résiduaires, sont chimiquement et/ou physiquement liés et claustrés de façon à ce qu'ils ne peuvent plus se lessiver au contact de l'eau, si bien qu'il est même possible de les déverser dans la mer sans le moindre danger.

Un autre avantage découlant directement du précèdent est que le produit résiduaire définitif peut être mis en oeuvre sans autre traitement de transformation et sans risque pour l'environnement en tant que matériau de remplissage sur les chantiers de construction routière, en tant que matériau de revêtement dans les décharges, etc...

Un avantage complémentaire est que le produit résiduaire solidifié est transformable par hersage en une matière poreuse et aggrégée laquelle, en vertu du fait que tous les éléments phytotoxiques potentiels sont fixés dans la structure de la matière, peut servir directement à l'ensemencement de diverses sortes de gazon et au piquage de diverses plantes.

Les avantages susnommés sont obtenus dans la présente invention par application d'un procédé de solidification des boues résiduaires, selon lequel lesdites boues résiduaires sont melangées, après neutralisation préalable ou non, a une petite quantité d'au moins un composé de calcium telle qu'un compose à base d'oxyde de calcium, une sorte de ciment par exemple, ou telle que des composés à base de sulfate de calcium, par exemple du gypse, de l'albâtre et de l'anhydrite - si ce composé calcium n'était pas déjà intrinsèquement présent dans les boues résiduaires - ainsi qu'à du silicate de métal alcalin et à des durcisseurs organiques pour en faire une masse solide et durable, ledit procédé étant caractérisé en ce qu'un silicate de de métal alcalin ou un mélange faiblement phytotoxique de silicate de soude et de silicate de potassium est incorporé dans les boues résiduaires contenant une certaine quantité de composé calcium, de même qu'un durcisseur organique non phytotoxique au moins, tel que décrit ultérieurement.

Afin d'illustrer les caractéristiques de la présente invention de façon concrete, la partie ci-dessous décrit une application recommandée, mais nullement limitative, du procédé de solidification de boues résiduaires conformément à la présente invention.

Si nécessaire, on mélange les boues résiduaires ou autres résidus avec des quantités réduites de ciment, de gypse ou de tout autre sel calcique. Il se peut que ces matières soient déjà contenues dans les boues résiduaires à traiter, selon la nature de ces dernières.

En appliquant les méthodes déjà connues, on ajoute à ce mélange un produit de base, composé de silicate de métal alcalin comme, par exemple, du silicate de soude. Cependant, étant donné le caractère très phytotoxique des fortes concentrations de sodium, on met en oeuvre, de préférence et selon les cas, un mélange de silicate de soude et de silicate de potassium, dont la phytotoxicité est nettement moindre. Du mélange de ces éléments se forme un silicate de calcium insoluble dans l'eau qui se précipite et qui, ce faisant, lie les composants solides des boues résiduaires; simultanément, l'eau s'associe elle aussi chimiquement à la structure décrite, par réaction exothermique.

Dès lors que le produit résiduaire n'est pas résistant au processus de lessivage, il convient d'adjoindre également un durcisseur au mélange. Selon la méthode de la présente invention, c'est pour cette raison que l'on ajoute au produit résiduaire au moins un agent durcisseur "interconnecteur" ("cross-linking").

Nous avons trouvé que l'urée-formaldehyde complétée de protéines et le polyacrylamide mélangée avec du glyoxal s'avèrent particulièrement efficaces en tant qu'agent durcisseur "interconnecteur".

La présente invention ne se limite nullement à la méthode décrite dans l'exemple; de même, il est possible d'appliquer de multiples variantes de ladite méthode de solidification de boues résiduaires sans pour autant sortir du cadre de la présente invention.

Ainsi, il est évident que les éléments à ajouter selon la présente invention, qu'il s'agisse d'un composé calcium comme établi ci-dessus ou d'un silicate de métal alcalin ou encore de l'agent durcisseur organique, peuvent être mis en oeuvre dans des proportions dont les limites varient largement. En tout état de cause, les quantités et les proportions doivent être calculées de telle sorte que le résultat obtenu soit un produit résiduaire durable et solide. En se livrant à quelques expériences comparatives simples, le professionnel pourra déterminer les proportions requises pour un résultat optimal. La quantité de sels calciques à ajouter variera généralement de 0 à 100 % de la masse de matière à traiter, en fonction de la forme sous laquelle le calcium est mélangé et de la nature de la matière à traiter.

Cette quantité n'est pas systématiquement proportionnelle aux autres additifs et ne peut être déterminée qu'expérimentalement.

Le silicate de métal et le durcisseur se mélangent communément dans une proportion de 10 à 1; ce rapport peut toutefois varier en fonction de l'application. D'ordinaire, les quantités de silicates de métal à ajouter se situent entre 2 et 30 % à de la masse de matière à traiter, selon la nature et la qualité des boues résiduaires ou autres résidus assimilés.

## Revendications

1. Procédé de solidification de boues résiduaires, suivant lequel lesdites boues résiduaires sont mélangées à une faible quantité d'au moins un composé calcium à base d'oxyde de calcium et/ou de sulfate de calcium - si ledit composé calcium n'est pas intrinsèquement contenu dans lesdites boues résiduaires - et à du silicate de métal alcalin et à des agents durcisseurs organiques dans les proportions requises pour en faire une masse solide et durable, ledit procédé étant caractérisé en ce que un silicate de métal alcalin est incorporé dans les boues résiduaires contenant une quantité de composé calcium, ainsi que de l'urée-formaldehyde mélangé à des protéines agissant en tant que durcisseur organique non phytotoxique.

2. Procédé de solidification de boues résiduaires, suivant lequel lesdites boues résiduaires sont mélangées à une faible quantité d'au moins un composé calcium à base d'oxide de calcium et/ou de sulfate de calcium - si ledit composé calcium n'est pas intrinsèquement contenu dans lesdites boues résiduaires - et à du silicate de métal alcalin et à des agents durcisseurs organiques dans les proportions requises pour en faire une masse solide et durable, ledit procédé étant caractérisé en ce que un silicate de métal alcalin est incorporé dans les boues résiduaires contenant une quantité de composé calcium, ainsi que de la polyacrylamide mélangée à du glyoxal agissant en tant que durcisseur organique non phytotoxique.

3. Procédé de solidification de boues résiduaires selon les revendications 1 ou 2, caractérisé en ce que le silicate de métal alcalin est substitué par un mélange "faiblement phytotoxique" de silicate de soude et de silicate de potassium.

## Patentansprüche

1. Verfahren zur Verfestigung von Schlammrückständen, nach welchem besagte Rückstände vermischt werden mit einer geringen Menge, zusammengesetzt aus mindestens einer Kalziumverbindung auf Kalziumoxidbasis mit oder ohne Kalziumsulfat - falls besagte Kalziumverbindung nicht bereits in den besagten Schlammrückständen vorhanden ist - und aus Alkalimetall-Silikat und aus organischen Erhärtungsmitteln, entsprechend dosiert um eine feste und dauerhafte Masse zu erhalten, wobei besagtes Verfahren dadurch gekennzeichnet ist, dass ein Teil Alkalimetall-Silikat den Schlammrückständen beigemengt wird, welche sowohl eine gewisse Menge Kalziumverbindung enthalten, als auch Harnstoff-Formaldehyd vermischt mit Proteinen, die als organische Erhärter wirken und nicht giftig für Pflanzen sind.

2. Verfahren zur Verfestigung von Schlammrückständen, nach welchem besagte Rückstände vermischt werden mit einer geringen Menge, zusammengesetzt aus mindestens einer Kalziumverbindung auf Kalziumoxidbasis mit oder ohne Kalziumsulfat - falls besagte Kalziumverbindung nicht bereits in den besagten Schlammrückständen vorhanden ist - und aus Alkalimetall-Silikat und aus organischen Erhärtungsmitteln, entsprechend dosiert um eine feste und dauerhafte Masse zu erhalten, wobei besagtes Verfahren dadurch gekennzeichnet ist, daß ein Teil Alkalimetall-Silikat den Schlammrückständen beigemengt wird, welche sowohl eine gewisse Menge Kalziumverbindung enthalten, als auch Polyacrylamid, vermischt Glyoxal, das als organischer Erhärter wirkt und nicht giftig für Pflanzen ist.

3. Verfahren zur Verfestigung von Schlammrückständen gemäß Anspruch 1 und 2, gekennzeichnet dadurch, daß das Alkalimetall-Silikat durch eine "leicht phytotoxische" Mischung aus Natriumsilikat und Kaliwasserglas ersetzt wird.

**Claims**

1. Process for solidification of sludge residues, in which said sludge residues are mixed with a small quantity of at least one calcium compound based on calcium oxide and/or calcium sulphate - if said calcium compound is not intrinsically contained in said sludge residues - together with alkaline metal silicate and organic hardening agents in the proportions required to form a solid, durable mass, where said process has the characteristic that an alcaline metal silicate is incorporated in the sludge residues containing a quantity of calcium compound and containing also urea formaldehyde mixed with proteins which act as an organic, non-phytotoxic hardening agent.

2. Process for solidification of sludge residues, in which said sludge residues are mixed with a small quantity of at least one calcium compound based on calcium oxide and/or calcium sulphate - if said calcium compound is not intrinsically contained in said sludge residues - together with alkaline metal silicate and organic hardening agents in the proportions required to form a solid, durable mass, where said process has the characteristic that an alkaline metal silicate is incorporated in the sludge residues containing a quantity of calcium compound and containing also polyacrylamide mixed with glyoxal acting as an organic, non-phytotoxic hardening agent.

3. Process for solidification of sludge residues as in claim 1 or 2, with the characteristic that instead of the alkaline metal silicate, a "low phototoxicity" mixture of sodium silicate and potassium silicate is used.